# EUROPÄISCHE PATENTSCHRIFT

(11) **EP 3 111 105 B1**
(45) Veröffentlichungstag und Bekanntmachung des Hinweises auf die Patenterteilung: **26.08.2020**
(21) Anmeldenummer: 15705994.0
(22) Anmeldetag: 19.02.2015
(51) Int. Cl.: F16F 1/368, F16F 3/02, F16F 3/087

(54) **TRAGFEDEREINHEIT FÜR EIN FAHRZEUGFAHRWERK**
SUPPORTING-SPRING UNIT FOR A VEHICLE CHASSIS
UNITÉ RESSORT DE SUSPENSION POUR UN TRAIN DE ROULEMENT DE VÉHICULE

(30) Priorität: 24.02.2014 DE 102014102335
(43) Veröffentlichungstag der Anmeldung: 04.01.2017
(73) Patentinhaber: ThyssenKrupp Federn und Stabilisatoren GmbH, 58119 Hagen (DE)
(72) Erfinder: LECHNER, Dieter, 40470 Düsseldorf (DE); GROSS, Marcel, 44359 Dortmund (DE); SCHARR, Gerhard, 18107 Elmenhorst (DE)
(74) Vertreter: thyssenkrupp Intellectual Property GmbH
(86) Internationale Anmeldenummer: PCT/EP2015/053534
(87) Internationale Veröffentlichungsnummer: WO 2015/124692

(56) Entgegenhaltungen:
- DE-A1- 3 701 265
- DE-A1- 10 141 432
- DE-C- 693 338
- GB-A- 2 367 876
- JP-U- S5 721 847
- US-A- 3 879 025

## Beschreibung

Die vorliegende Erfindung betrifft eine Tragfedereinheit für ein Fahrzeugfahrwerk zur Anordnung zwischen einem Fahrzeugaufbau und einem Radträger, wobei die Tragfedereinheit Blattfedern aus einem Faserverbundwerkstoff aufweist.

### STAND DER TECHNIK

Die JP S57 21847 U zeigt eine für eine Fahrzeugaufhängung geeignete Feder.

Aus der DE 101 41 432 A1 ist eine Tragfedereinheit aus zwei Blattfedern bekannt, die aus einem gewichtsminimierenden Faserverbundwerkstoff ausgebildet sind. Die Tragfedereinheit ist aufgebaut aus zwei Blattfederelementen, die eine Wölbung aufweisen, wobei die Wölbungsinnenseiten der Blattfedern aufeinander zu weisen. An den Federenden der Blattfedern befinden sich Endverbindungselemente, über die die beiden Blattfedern miteinander verbunden sind. Dabei ist angegeben, dass mindestens zwei Blattfedern aus Faserverbundwerkstoff die Tragfedereinheit bilden können, wobei bei einem Aufbau von mehr als zwei Blattfedern diese anstatt einer einlagigen Ausführung mehrlagig gestapelt aufeinander angeordnet und über die Endverbindungselemente miteinander verbunden werden können. Ein damit erzeugter stapelweiser Aufbau von Blattfederelementen, die zumindest aus einem Stahlwerkstoff hergestellt sind, ist beispielsweise aus dem Nutzfahrzeugbau bekannt.

Um die Tragfedereinheit zwischen einem Fahrzeugaufbau und einem Radträger anzuordnen, befinden sich in den Mittelbereichen der Blattfedern Mittelverbindungselemente in Form von Schraubzapfen, sodass die obere Blattfeder und die untere Blattfeder mit dem Fahrzeugaufbau beziehungsweise dem Radträger verschraubt werden kann. In Betrieb einer solchen Blattfedereinheit ist ein Mindest-Federweg erforderlich, und es werden Stopper vorgeschlagen, die innenseitig im Bereich der Mittelbereiche an den Blattfedern angebracht sind, sodass die sich gegenüberliegenden Stopper als Anschläge gegeneinander anschlagen können, wenn die Tragfedereinheit mit einer Druckkraft beaufschlagt wird, wodurch der maximale Federweg stark eingeschränkt wird.

Nachteilhafterweise können durch den gezeigten Aufbau der Tragfedereinheit nur vermindert Querkräfte aufgenommen werden, da eine Schräglast auf das Blattfederpaar schnell zu einem Versagen der Tragfedereinheit führen kann. Insbesondere ergibt sich bei dem gezeigten Aufbau nicht die Möglichkeit, dass sich das Blattfederpaar seitlich ausbiegen kann, und durch den erforderlichen relativ großen Federweg in Anwendung in einem Fahrzeugfahrwerk wird eine große Länge in Querrichtung der Blattfedern erforderlich, die senkrecht zur Federrichtung verläuft. Die Federrichtung ist dabei definiert durch die Positionen der gezeigten Mittelverbindungselemente. Eine mehrlagige Ausgestaltung der Blattfedern in einer Paketanordnung, die bei der gezeigten zweiseitigen Wölbungsrichtung der Blattfedern stapelweise aufgebracht mit ihrer Wölbungsinnenseite über die Endverbindungselemente miteinander verbunden werden, kann eine Dissipation einer Bewegungsenergie erreicht werden, die in Verbindung mit einem Stoßdämpfer als Tragfedereinheit für ein Fahrzeugfahrwerk in der Tragfedereinheit nicht notwendig ist.

### OFFENBARUNG DER ERFINDUNG

Aufgabe der Erfindung ist die Weiterbildung einer Tragfedereinheit für ein Fahrzeugfahrwerk zur Anordnung zwischen einem Fahrzeugaufbau und einem Radträger. Dabei soll die Tragfedereinheit bei einer gewichtsminimalen Ausführung verbessert Querkräfte aufnehmen können und einen größeren Federweg ermöglichen.

Die Aufgabe wird ausgehend von einer Tragfedereinheit gemäß den bekannten Merkmalen aus Anspruch 1 in Verbindung mit den kennzeichnenden Merkmalen gelöst. Vorteilhafte Weiterbildungen der Erfindung sind in den abhängigen Ansprüchen angegeben.

Erfindungsgemäß wird eine Tragfedereinheit für ein Fahrzeugfahrwerk zur Anordnung zwischen einem Fahrzeugaufbau und einem Radträger vorgeschlagen, die wenigstens vier Blattfedern aus einem Faserverbundwerkstoff aufweist, wobei die Blattfedern zwischen zwei Federenden eine flächige Erstreckung aufweisen und paarweise beabstandet zueinander über die Federenden durch Endverbindungselemente miteinander verbunden sind, sodass wenigstens zwei in Reihe angeordnete Blattfederpaare gebildet sind, und wobei die Blattfederpaare über zwischen den Federenden gebildete Mittelbereiche der Blattfedern durch Mittelverbindungselemente miteinander verbunden sind.

Durch den erfindungsgemäßen Aufbau der Tragfedereinheit aus mehreren in Reihe angeordneten Blattfederpaaren wird der Vorteil eines deutlich erhöhten Federweges erreicht, da der Gesamtfederweg der Tragfedereinheit gebildet wird durch die Summe der Einzelfederwege der Blattfedern beziehungsweise der Blattfederpaare. Die Blattfedern sind dabei einzeln angeordnet und entweder über die Endverbindungselemente oder die Mittelverbindungselemente miteinander verbunden. Insbesondere sind damit die Blattfedern nicht in einer Stapel- oder Paketanordnung zueinander angeordnet, und die Blattfedern liegen nicht flächig aufeinander. Dadurch wird zusätzlich der Vorteil erreicht, dass sich zwischen den Blattfedern keine Verunreinigungen absetzen können, die die Oberfläche der Blattfedern beschädigen können.

Die Tragfedereinheit kann wenigstens zwei Mittelverbindungselemente zur Verbindung der Blattfederpaare aufweisen, wobei die Mittelverbindungselemente auch an den endseitigen Blattfedern im Mittelbereich angebracht werden, um einen Anschluss der Tragfedereinheit beispielsweise an einen Fahrzeugaufbau oder an einen Radträger zu ermöglichen, die eine andere Ausgestaltung aufweisen können als Mittelverbindungselemente, die zwischen den Blattfedern angeordnet sind. Wenigstens zwei der Mittelverbindungselemente zur Verbindung der Blattfederpaare bestimmen eine Federrichtung, die sich durch die Mittelverbindungselemente hindurch erstreckt. Die Federrichtung bildet dabei diejenige Richtung, in die die Tragfedereinheit einfedert, durch den Aufbau der Tragfedereinheit muss die Federrichtung jedoch nicht eine Gerade durch die Tragfedereinheit hindurch bilden, und die Tragfedereinheit kann beispielsweise auch in einer Bogenform ausgestaltet sein und auf dieser einfedern.

Die Blattfedern der Tragfedereinheit können plan ausgebildet sein oder vorzugsweise eine Wölbung aufweisen, wobei die paarweise über die Endverbindungselemente miteinander verbundenen Blattfedern mit ihrer Wölbungsinnenseite aufeinander zuweisen. Folglich weisen die Blattfedern mit ihrer Wölbungsaußenseite aufeinander zu, die mit den Mittelverbindungselementen miteinander verbunden sind. Über die Längserstreckung der Tragfedereinheit in Federrichtung wechselt sich damit die Wölbung der Blattfedern ab, sodass die Blattfedern paarweise mit ihren Wölbungsinnenseiten und ihren Wölbungsaußenseiten aufeinander zuweisen oder voneinander wegweisen. Sind die Blattfedern plan ausgeführt, so ergibt sich die plane Gestalt der Blattfedern lediglich im kraftlosen Zustand der Tragfedereinheit, und bei einer Druck- oder Zugbelastung der Tragfedereinheit erfahren die Blattfedern ebenfalls eine Wölbung, sodass die Wölbungsaußenseiten von zwei ein Blattfederpaar bildenden Blattfedern aufeinander zuweisen.

Die vorstehend beschriebene Aufgabe der Tragfedereinheit mit gewölbten Blattfedern ergibt sich insbesondere im kraftlosen Zustand der Tragfedereinheit, und bei einer Druckbelastung der Federeinheit können die kraftlos gewölbten Blattfedern plangezogen werden, sodass die vorstehende Beschreibung der Wölbungen der Blattfedern lediglich im kraftlosen Zustand der Tragfedereinheit zutrifft.

Die Blattfederpaare können in einer quer zur Federrichtung verlaufenden Querrichtung länglich erstreckt ausgebildet sein. Dabei können die Querrichtungen von zwei oder mehr Blattfederpaaren eine zueinander gleiche oder eine um die Federrichtung zueinander verdrehte Orientierung aufweisen. Sind die Blattfederpaare in ihren Querrichtungen verdreht zueinander angeordnet, können Querkräfte durch die Tragfedereinheit verbessert aufgenommen werden, und die Blattfederpaare können mit den Mittelverbindungselementen eine Federrichtung definieren, die eine Krümmung aufweist.

Mit weiterem Vorteil kann der Faserverbundwerkstoff der Blattfedern Verstärkungsfasern aufweisen, wobei die Verstärkungsfasern in einer Richtung der Blattfedern verlaufen können, die als Längsrichtung zwischen den Federenden erstreckend ausgebildet ist. Dadurch wird eine Optimierung der Lastaufnahmefähigkeit durch die Blattfedern erreicht, und die Lastaufnahme durch die Blattfedern wird verbessert gegenüber einer makroskopisch-homogenen, statistischen Verteilung der Fasern im Faserverbundwerkstoff. Die Verstärkungsfasern können gemeinsam mit weiteren, insbesondere auch quer oder diagonal zur Verlaufsrichtung der Verstärkungsfasern verlaufenden Fasern in einer Matrix eingebettet sein, beispielsweise gebildet durch ein Epoxidharz.

Die Endverbindungselemente sind aus einem Gummi, aus Kunststoff oder einem metallischen Werkstoff ausgebildet und weisen zwei schräg ausgeführte Aufnahmeschlitze auf, in denen die Federenden der Blattfedern aufgenommen werden können. Durch die geringeren Einzelfederwege der Blattfederpaare, die durch die Endverbindungselemente zusammengehalten werden, ergibt sich eine kleinere Bewegung der Federenden in den Aufnahmeschlitzen, wodurch die Verbindung zwischen den Blattfedern und den Endverbindungselementen geringer belastet wird. Ferner können die Endverbindungselemente durch einen härteren Werkstoff gebildet werden, wodurch die Tragfähigkeit der Tragfedereinheit erhöht wird.

Das wenigstens eine Mittelverbindungselement kann so mit den Blattfedern verbunden sein, dass die Blattfedern mit einem unveränderten Querschnittsverlauf die Verbindungsstelle mit dem Mittelverbindungselement durchlaufen. Dadurch entsteht eine verbesserte Belastbarkeit und einfachere Herstellbarkeit der Blattfedern, die durch die Mittelverbindungselemente in ihrer Struktur nicht geschwächt werden. Mit besonderem Vorteil kann der Querschnitt, mit dem sich die Blattfedern zwischen den Federenden erstrecken, über der gesamten Länge der Blattfedern in Querrichtung unverändert, das heißt, gleichbleibend ausgebildet sein.

Die Blattfedern können zwischen den Federenden im kraftlosen Zustand bogenförmig, parabelförmig oder gerade verlaufend ausgebildet sein. Beispielsweise können die Blattfedern in Querrichtung zwischen den Blattfederelementen auch geschwungen ausgeführt sein, insbesondere sind die Blattfedern jedoch beidseitig der Anordnung der Mittelverbindungselemente symmetrisch ausgeformt.

Gemäß einer weiteren vorteilhaften Ausführungsform der erfindungsgemäßen Tragfedereinheit kann wenigstens ein Führungselement vorgesehen sein, durch das die Blattfederpaare geführt sind, insbesondere um eine Verdrehung der Blattfederpaare um die Federrichtung zu verhindern. Die einzelnen Blattfedern beziehungsweise Blattfederpaare können dabei bei einer Einfederung im Führungselement abgleiten, um die Beweglichkeit der Blattfedern gegenüber dem beispielsweise starr angeordneten Führungselement zu gewährleisten. Beispielsweise können auch zwei Führungselemente gegenüberliegend die Blattfedern einfassen, und beispielsweise können die Blattfedern über die Endverbindungselemente im Führungselement geführt sein. Auch ist es denkbar, dass das oder die Führungselemente ein Gehäuse bilden, das die Blattfedern vor Feuchtigkeit und Verunreinigungen schützt.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematisierte Ansicht einer Tragfedereinheit mit Blattfedern aus einem Faserverbundwerkstoff und
- Figur 2: die Tragfedereinheit gemäß Figur 1 in einem kraftbeaufschlagten Zustand, wobei die Federrichtung der Tragfedereinheit eine Krümmung aufweist.

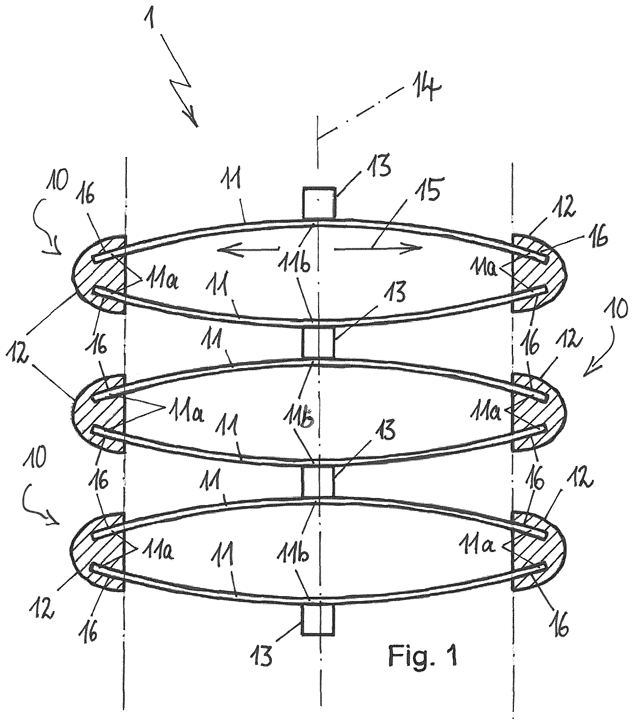

Figur 1 zeigt eine Tragfedereinheit 1 in einer schematisierten Ansicht mit Blattfedern 11, die aus einem Faserverbundwerkstoff gebildet sind, und Federkörper der Tragfedereinheit 1 bilden. Die Tragfedereinheit 1 kann in nicht näher gezeigter Weise für ein Fahrzeugfahrwerk eines Fahrzeugs dienen und beispielsweise zwischen einem Fahrzeugaufbau und einem Radträger angeordnet sein, und so einen Bestandteil eines Fahrzeugfahrwerkes bilden.

Die Blattfedern 11 besitzen zwischen zwei Federenden eine flächige, gekrümmte Erstreckung und die Blattfedern 11 sind paarweise beabstandet zueinander über die Federenden 11a durch Endverbindungselemente 12 miteinander verbunden, wodurch drei in Reihe angeordnete Blattfederpaare 10 gebildet sind.

Die Blattfedern 11 sind im kraftlosen Zustand mit einer Wölbung ausgeführt, und die Wölbungsinnenseiten der Blattfedern 11 weisen zur Bildung eines jeden Blattfederpaares 10 aufeinander zu. Gezeigt sind beispielhaft drei Blattfederpaare 10 mit insgesamt sechs Blattfedern 11. Abweichend von der beispielhaften Darstellung der Tragfedereinheit 1 mit drei Blattfederpaaren 10 können auch zwei oder mehr als drei Blattfederpaare 10 mit jeweils zwei Blattfedern 11 die Tragfedereinheit 1 bilden.

Mittig zwischen den Federenden 11a weisen die Blattfedern 11 Mittelbereiche 11b auf, und über die Mittelbereiche 11b sind die Blattfedern 11 aus benachbarten Blattfederpaaren 10 über Mittelverbindungselemente 13 miteinander verbunden. Weitere Mittelverbindungselemente 13 sind an den außenseitigen Blattfedern 11 zum peripheren Anschluss und zur Einleitung einer Kraft in die Tragfedereinheit 1 dargestellt.

Die Mittelverbindungselemente 13 definieren eine Federrichtung 14, die durch die Mittelverbindungselemente 13 hindurch verläuft. Die Tragfedereinheit 1 ist im unbelasteten Zustand gezeigt, sodass die Federrichtung 14 eine Gerade bildet. Quer zur Federrichtung 14 ist eine Querrichtung 15 definiert, und die Blattfedern 11 erstrecken sich mit ihrer Querschnittsform länglich in Querrichtung 15. Die Endverbindungselemente 12 können aus einem Gummiwerkstoff ausgebildet sein und weisen Aufnahmeschlitze 16 auf, die taschenartig ausgebildet sind, und in die die Federenden 11a der Blattfedern 11 einsitzen. Die Federenden 11a können dabei in den Aufnahmeschlitzen 16 verklebt sein.

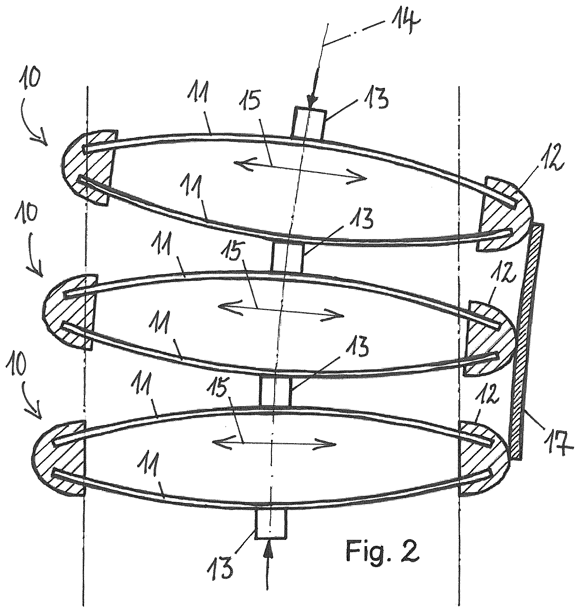

Figur 2 zeigt die Tragfedereinheit 1 in einem belasteten Zustand, angedeutet durch zwei Pfeile, die eine Kraft auf die außenseitig angebrachten Mittelverbindungselemente 13 an den Blattfedern 11 bezeichnen. Durch die Kraftbeaufschlagung erfährt die Federrichtung 14 über die Mittelverbindungselemente 13 eine Krümmung, wobei lediglich beispielhaft die drei Blattfederpaare 10 in ihrer Querrichtung 15 um die Federrichtung 14 eine zueinander gleiche Ausrichtung aufweisen. Um die Ausrichtung der Blattfederpaare 10 um die Federrichtung 14 zu stabilisieren, ist schematisiert ein Führungselement 17 gezeigt, das die drei Blattfederpaare 10 über die Endverbindungselemente 12 führt. Das Führungselement 17 kann beispielsweise so ausgestaltet sein, dass die Orientierung der Querrichtung 15 um die Federrichtung 14 aufrechterhalten bleibt, das Führungselement 17 kann jedoch in Federrichtung 14 elastisch nachgeführt werden, um eine äußere Kraftbeaufschlagung auf die Blattfederpaare 10 in Federrichtung 14 zu vermeiden oder die Endverbindungselemente 12 können am Führungselement 17 in Federrichtung 14 nachgeführt werden und an diesem abgleiten.

Durch die Reihenanordnung der Blattfederpaare 10 ergibt sich ein Gesamtfederweg der Tragfedereinheit 1, der sich aus der Summe der Einzelfederwege der Blattfederpaare 10 ergibt. Die Blattfedern 11 sind rechteckförmig ausgestaltet und weisen eine in Querrichtung 15 längliche Erstreckung auf.

Die Erfindung beschränkt sich in ihrer Ausbildung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste

- 1: Tragfedereinheit
- 10: Blattfederpaar
- 11: Blattfeder
- 11a: Federende
- 11b: Mittelbereich
- 12: Endverbindungselement
- 13: Mittelverbindungselement
- 14: Federrichtung
- 15: Querrichtung
- 16: Aufnahmeschlitz
- 17: Führungselement

## Patentansprüche

1. Tragfedereinheit (1) für ein Fahrzeugfahrwerk zur Anordnung zwischen einem Fahrzeugaufbau und einem Radträger, aufweisend wenigstens vier Blattfedern (11) aus einem Faserverbundwerkstoff, wobei die Blattfedern (11) zwischen zwei Federenden (11a) eine flächige Erstreckung aufweisen und paarweise beabstandet zueinander über die Federenden (11a) durch Endverbindungselemente (12) miteinander verbunden sind, sodass wenigstens zwei in Reihe angeordnete Blattfederpaare (10) gebildet sind, und wobei die Blattfederpaare (10) über zwischen den Federenden (11a) gebildete Mittelbereiche (11b) der Blattfedern (11) durch Mittelverbindungselemente (13) miteinander verbunden sind, **dadurch gekennzeichnet, dass** die Endverbindungselemente (12) aus einem Gummi, aus Kunststoff oder aus einem metallischen Werkstoff ausgebildet sind und zwei schräg ausgeführte Aufnahmeschlitze (16) aufweisen, in denen die Federenden (11a) der Blattfedern (11) aufgenommen sind.

2. Tragfedereinheit (1) nach Anspruch 1, **dadurch gekennzeichnet, dass** wenigstens zwei Mittelverbindungselemente (13) zur Verbindung der Blattfederpaare (10) eine durch die Mittelverbindungselemente (13) verlaufende Federrichtung (14) bestimmen.

3. Tragfedereinheit (1) nach Anspruch 1 oder 2, **dadurch gekennzeichnet, dass** die Blattfedern (11) eine Wölbung aufweisen, wobei die paarweise über die Endverbindungselemente (12) miteinander verbundenen Blattfedern (11) mit ihrer Wölbungsinnenseite aufeinander zu weisen.

4. Tragfedereinheit (1) nach Anspruch 3, **dadurch gekennzeichnet, dass** die Blattfederpaare (10) in einer quer zur Federrichtung (14) verlaufenden Querrichtung (15) länglich erstreckt ausgebildet sind.

5. Tragfedereinheit (1) nach Anspruch 4, **dadurch gekennzeichnet, dass** die Querrichtungen (15) von zwei oder mehr Blattfederpaaren (10) eine zueinander gleiche oder um die Federrichtung (14) zueinander verdrehte Orientierung aufweisen.

6. Tragfedereinheit (1) nach einem der vorgenannten Ansprüche, **dadurch gekennzeichnet, dass** der Faserverbundwerkstoff der Blattfedern (11) Verstärkungsfasern aufweist, wobei die Verstärkungsfasern der Blattfedern (11) zwischen den Federenden (11a) erstreckend verlaufen.

7. Tragfedereinheit (1) nach einem der vorgenannten Ansprüche, **dadurch gekennzeichnet, dass** das wenigstens eine Mittelverbindungselement (13) so mit den Blattfedern (11) verbunden ist, dass die Blattfedern (11) mit einem unveränderten Querschnittsverlauf die Verbindungsstelle mit dem Mittelverbindungselement (13) durchlaufen.

8. Tragfedereinheit (1) nach einem der vorgenannten Ansprüche, **dadurch gekennzeichnet, dass** die Blattfedern (11) zwischen den Federenden (11a) im kraftlosen Zustand bogenförmig, parabelförmig oder gerade verlaufend ausgebildet sind.

9. Tragfedereinheit (1) nach einem der vorgenannten Ansprüche, **dadurch gekennzeichnet, dass** wenigstens ein Führungselement (17) vorgesehen ist, durch das die Blattfederpaare (10) geführt sind, insbesondere um eine Verdrehung der Blattfederpaare (10) um die Federrichtung (14) zu verhindern.

## Claims

1. A suspension spring unit (1) for a vehicle chassis for arrangement between a vehicle body and a wheel carrier, comprising at least four leaf springs (11) composed of a fiber composite material, wherein the leaf springs (11) have a flat extent between two spring ends (11a) and are connected to each other in pairs at a distance from each other by means of end connecting elements (12) over the spring ends (11a), and therefore at least two leaf spring pairs (10) arranged in series are formed, and wherein the leaf spring pairs (10) are connected to each other via central regions (11b), which are formed between the spring ends (11a), of the leaf springs (11) by means of central connecting elements (13) **characterized in that** the end connecting elements (12) are formed from a rubber, from plastic or from a metallic material and have two in particular obliquely formed receiving slots (16) in which the spring ends (11a) of the leaf springs (11) are accommodated.

2. The suspension spring unit (1) as claimed in claim 1, **characterized in that** at least two central connecting elements (13) for connecting the leaf spring pairs (10) determine a spring direction (14) running through the central connecting elements (13).

3. The suspension spring unit (1) as claimed in claim 1 or 2, **characterized in that** the leaf springs (11) comprise an arch, wherein the leaf springs (11) which are connected to each other in pairs via the end connecting elements (12) face each other with the inner side of their arch.

4. The suspension spring unit (1) as claimed in claim 3, **characterized in that** the leaf spring pairs (10) are formed with an elongate extent in a transverse direction (15) running transversely with respect to the spring direction (14).

5. The suspension spring unit (1) as claimed in claim 4, **characterized in that** the transverse directions (15) of two or more leaf spring pairs (10) have an orientation identical to one another or rotated about the spring direction (14) with respect to one another.

6. The suspension spring unit (1) as claimed in one of the preceding claims, **characterized in that** the fiber composite material of the leaf springs (11) comprises reinforcing fibers, wherein the reinforcing fibers of the leaf springs (11) run in a manner extending between the spring ends (11a).

7. The suspension spring unit (1) as claimed in one of the preceding claims, **characterized in that** the at least one central connecting element (13) is connected to the leaf springs (11) in such a manner that the leaf springs (11) run with an unchanged cross-sectional profile through the connecting point to the central connecting element (13).

8. The suspension spring unit (1) as claimed in one of the preceding claims, **characterized in that** the leaf springs (11) are formed in an arcuate, parabolic or rectilinearly running manner between the spring ends (11a) in the force-free state.

9. The suspension spring unit (1) as claimed in one of the preceding claims, **characterized in that** at least one guide element (17) is provided by means of which the leaf spring pairs (10) are guided, in particular in order to prevent rotation of the leaf spring pairs (10) about the spring direction (14).

## Revendications

1. Unité ressort de suspension (1) pour un train de roulement de véhicule, destinée à être disposée entre une caisse de véhicule et un support de roue, présentant au moins quatre ressorts à lame (11) en matériau composite renforcé par des fibres, les ressorts à lame (11) présentant une étendue plate entre deux extrémités de ressort (11a) et étant connectés les uns aux autres par des éléments de connexion d'extrémité (12), de manière espacée les uns des autres par paires par le biais des extrémités de ressort (11a), de telle sorte qu'au moins deux paires de ressorts à lame (10) disposées en rangée soient formées, et les paires de ressorts à lame (10) étant connectées les unes aux autres par des éléments de connexion centraux (13) par le biais de régions centrales (11b) des ressorts à lame (11) formées entre les extrémités de ressort (11a), **caractérisée en ce que** les éléments de connexion d'extrémité (12) sont réalisés en caoutchouc, en plastique ou en matériau métallique et présentent deux fentes de réception (16) réalisées obliquement, dans lesquelles sont reçues les extrémités de ressort (11a) des ressorts à lame (11).

2. Unité ressort de suspension (1) selon la revendication 1, **caractérisée en ce qu'**au moins deux éléments de connexion centraux (13) pour la connexion des paires de ressorts à lame (10) définissent une direction des ressorts (14) s'étendant à travers les éléments de connexion centraux (13).

3. Unité ressort de suspension (1) selon la revendication 1 ou 2, **caractérisée en ce que** les ressorts à lame (11) présentent une courbure, les ressorts à lame (11) connectés les uns aux autres par paires par le biais des éléments de connexion d'extrémité (12) étant tournés les uns vers les autres avec leur côté intérieur de courbure.

4. Unité ressort de suspension (1) selon la revendication 3, **caractérisée en ce que** les paires de ressorts à lame (10) sont réalisées de manière étendue en longueur dans une direction transversale (15) s'étendant transversalement à la direction des ressorts (14) .

5. Unité ressort de suspension (1) selon la revendication 4, **caractérisée en ce que** les directions transversales (15) de deux ou plus de deux paires de ressorts à lame (10) présentent une orientation identique les unes aux autres ou tournée les unes par rapport aux autres autour de la direction des ressorts (14).

6. Unité ressort de suspension (1) selon l'une quelconque des revendications précédentes, **caractérisée en ce que** le matériau composite renforcé par des fibres des ressorts à lame (11) présente des fibres de renfort, les fibres de renfort des ressorts à lame (11) s'étendant entre les extrémités de ressort (11a).

7. Unité ressort de suspension (1) selon l'une quelconque des revendications précédentes, **caractérisée en ce que** l'au moins un élément de connexion central (13) est connecté aux ressorts à lame (11) de telle sorte que les ressorts à lame (11) passent avec une allure en section transversale non modifiée par le point de connexion avec l'élément de connexion central (13).

8. Unité ressort de suspension (1) selon l'une quelconque des revendications précédentes, **caractérisée en ce que** les ressorts à lame (11) entre les extrémités de ressort (11a) sont réalisés dans l'état non soumis à une force de manière à s'étendre sous forme courbe, parabolique ou droite.

9. Unité ressort de suspension (1) selon l'une quelconque des revendications précédentes, **caractérisée en ce qu'**au moins un élément de guidage (17) est prévu, par lequel les paires de ressort à lame (10) sont guidées, en particulier pour empêcher une rotation des paires de ressort à lame (10) autour de la direction des ressorts (14) .
